Europäisches Patentamt

European Patent Office

Office européen des brevets

(11) Publication number: **0 508 185 A1**

# EUROPEAN PATENT APPLICATION

(21) Application number: **92104870.8**

(22) Date of filing: **20.03.92**

(51) Int. Cl.⁵: **G05B 19/04**, G05B 19/417

(30) Priority: **11.04.91 US 683896**

(43) Date of publication of application:
**14.10.92 Bulletin 92/42**

(84) Designated Contracting States:
**DE FR GB**

(71) Applicant: **INTERNATIONAL BUSINESS MACHINES CORPORATION**
Armonk, NY 10504(US)

(72) Inventor: **Kocher, Ronald F.**
**129 Lincoln Drive**
**Vestal, N.Y. 13850(US)**

(74) Representative: **Mönig, Anton, Dipl.-Ing.**
**IBM Deutschland GmbH Patentwesen und Urheberrecht Schönaicher Strasse 220**
**W-7030 Böblingen(DE)**

(54) Method of controlling a multi-output physical process.

(57) Disclosed is a method of controlling a multi-output physical process with a vertically distributed process controller having interrupt data transfer. The process controller includes a host digital computer operating in a multi-tasking environment digital computer, and having a plurality of communications ports. Each of the communications ports is associated with a microprocessor and memory. According to the disclosed invention a process control application program is running in the digital computer, while the sensing and digitizing of at least one of the process physical outputs is being carried out in conjunction with one of the communications ports. The digitized output of the physical process is stored in the memory and an interrupt request is generated by the communications port corresponding to the process physical output. The host digital computer services an interrupt routine to input the contents of the communications port memory means to the digital computer. After inputting the value of the variable, the process control task or thread resumes its process control application with a new value of the physical process variable. This new value is then used to generate a process control output corresponding to the newly inputted process physical output. This new output is transmitted from the digital computer as an input to an effector of the controlled physical process.

| (1) PROCESS CONTROL APPLICATION RUNNING UNDER MULTI-TASKING |
| --- |
| (2) SENSING AND DIGITIZATION CARRIED OUT BY TRANSDUCERS AND MULTI-PORT COMMUNICATIONS INTERFACE |
| (3) PROCESS OUTPUT TEMPORARILY STORED IN DEDICATED MEMORY OF MULTI-PORT COMMUNICATIONS INTERFACE |
| (4) INTERRUPT REQUEST GENERATED BY MICROPROCESSOR OF MULTIPORT COMMUNICATIONS INTERFACE |
| (5) HOST DIGITAL COMPUTER SERVICES INTERRUPT REQUEST |
| (6) MEMORY TRANSFER FROM MULTI-PORT COMMUNICATIONS INTERFACE TO HOST DIGITAL COMPUTER |
| (7) INTERRUPT SERVICE ROUTINE COMPLETED, INTERRUPTED APPLICATION RESUMED |
| (8) NEW CONTROL VARIABLE CALCULATED AND TRANSMITTED TO EFFECTUATORS |

FIG.3

The invention relates to a process controller and process for controlling a multi-output physical process. The process controller includes a host digital computer operating in a multi-tasking, multi-thread environment, and having a multi-port communications interface serving a plurality of communications ports. The multi-port communications interface is associated with a dedicated microprocessor and memory. More specifically, the invention relates to interrupt controlled sensing, where a process control application program is running in the host digital computer, while the sensing and digitizing of at least one of the process physical outputs is carried out in conjunction with one of the communications ports. Data transfer from the multi-port communications interface to the digital computer is interrupt controlled. After inputting the value of the variable, the process control task or thread resumes its process control application with a new value of the physical process variable. This new value is then used to generate a process control output of the host digital computer corresponding to the newly inputted process physical output. This process control output is transmitted from the host digital computer as an input to an effector of the controlled physical process.

The on-line, real time control of physical processes, such as industrial processes, requires the on-line, real time solution of many simultaneous digital controller transfer functions, i.e., difference equations, to satisfy the design specifications for the physical process. Moreover, real-time, on-line process control of a physical system involves the changing of system parameters and controller difference equations, as well as the addition of compensators, to achieve desired system characteristics, i.e., performance specifications. These performance specifications include steady state accuracy, transient response, relative and absolute stability, sensitivity to change in system parameters, and disturbance rejection, among others.

More specifically, on-line, real-time process control, whether direct digital control or distributed digital control, requires continuously sensing, transmitting, and updating the values of the state variables and output variables to continuously solve the many difference equations constituting the digital controller transfer functions. This can be done with software driven data acquisition, i.e., polling. However, for a large number of inputs, many of which are practically time invariant, polling is wasteful and slows down the running of the process control application. Interrupt driven I/O, while useful for low data input rates from single I/O devices, as keyboards, has not been applied to high data input rates from a plurality of sources.

It is an object of this invention to provide data input from a plurality of sources.

It is a further object of this invention to provide this input without slowing down the running of the application programs.

It is still a further object of the invention to provide this input at a rate approaching the machine interrupt speed.

These and other objects of the invention are attained by the process control method and apparatus of the invention. The invention utilizes a host digital computer capable of operating in a multi-tasking, multi-thread environment in co-operation with a multiport communications interface. Each of the communications ports is associated with a dedicated microprocessor and memory. The multiport communications interface monitors a plurality of process outputs, capturing values of the outputs, and storing the captured values in the memory associated with the communications interface. These temporarily stored values are then transmitted to the host digital computer under interrupt control.

The combination of interrupt controlled data transfer and a multi-tasking, multi-thread environment is particularly advantageous. It allows the process control applications to detect and process the received data at speeds considerably above those attainable by polling, for example, at system hardware speeds.

According to the method of the invention, a process control application program runs under the multi-tasking, multi-thread environment, while the sensing and digitizing of at least one of the process physical outputs is carried out in conjunction with one of the communications ports. The output of the physical process is temporarily stored in the memory associated with the communication port or the multi-port communications interface. When this output is stored an interrupt request is generated, for example by the communications port corresponding to the process physical output, or by the multi-port communications interface.

The host digital computer services an interrupt routine to suspend the process control application program task or thread, and input the contents of the communications port memory to the host digital computer. After inputting the value of the variable, the process control task or thread resumes its process control application with a new value of the physical process variable. This new value is then used to generate a process control output corresponding to the newly inputted process physical output. The calculated new value of the process control output is transmitted from the digital computer as an input to an effector or actuator of the controlled physical process.

The multi-port communications interface has dedicated microprocessor and memory capability separate from that of the host digital computer. In this way sampling algorithms are carried out independently of the running of the process control application, but subject to the supervision thereof. This allows the multi-port communications interface to control data sampling, the protocols used for collecting and transmitting the data, the organization of storage, and, subject to supervisory control by the process control application, generating the appropriate interrupts.

The invention may be understood by reference to the Figs. appended hereto, whereby

Fig. 1    is a schematic view of a multi-element control system incorporating the process control system of the invention;

Fig. 2    is a simplified, high level block diagram in accordance with one exemplification of the process control system of the invention;

Fig. 3    is a simplified flow chart in accordance with one exemplification of the process control method of the invention;

Fig. 4    is a schematic view of a Computer Integrated Manufacturing (CIM) implementation in accordance with an exemplification of the process control method and system of the invention, having communication between discrete manufacturing steps, which may or may not be integrated;

Fig. 5    is a schematic view of a host-server numerical machine control implementation in accordance with an exemplification of the process control method and system of the invention;

Fig. 6    is a graph plotting the heat generation and heat removal curves for an exothermic chemical reaction taking place in a Continuous Flow Stirred Tank Chemical Reactor and

Fig. 7    is a diagram of a Continuous Flow Stirred Tank Chemical Reactor.

a. System Architecture

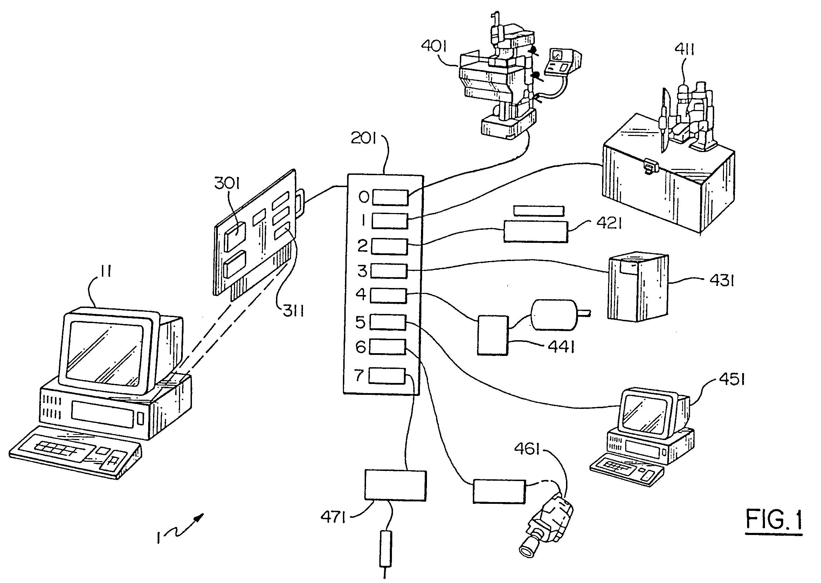

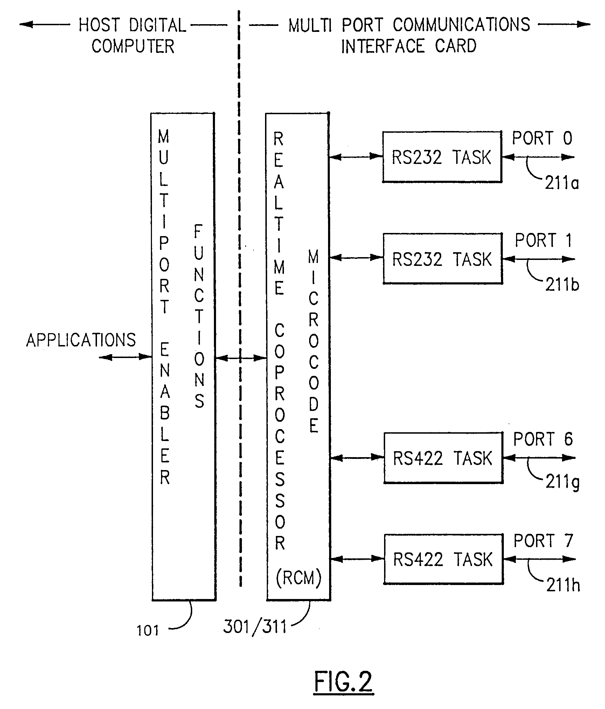

The invention utilizes a digital computer capable of operating in a multi-tasking, multi-thread environment in co-operation with a dedicated microprocessor controlled multiport communications interface. This structure is shown in Figs. 1 and 2.

Fig. 1 shows a multi-element control system 1 with a physical process, as an industrial process. The system includes a host system digital computer 11. The host system digital computer 11 provides a multi-tasking, multi-thread environment, as will be more fully described hereinbelow. The host system computer 11 communicates with the process, i.e., the industrial process, through the dedicated microprocessor controlled multiport communications interface 201. Typical sensors, controllers, effectors, and actuators for a typical robotic materials removal and materials processing island illustrated in Fig. 1 include a numerical control machine 401, a robot 411, a scale 421, a programmable logic controller 431, a motor controller 441, a machine operator's terminal 451, a machine vision recognition input, 461, and a strain gauge 471. It is to be understood that the control system of the invention may be a distributed digital control system, and the sensors, controllers, effectuators, and actuators may be programmable controllers under the supervision of the host digital computer 11, or that the control system 1 of the invention may be a direct digital control system, with the sensors, controllers, effectuators, and actuators under the direct control of the host digital computer 11. The term "sensors" is used herein broadly, and includes transducers capable of converting a physical quantity into an electrical signal.

It is to be noted that the choice of inputs and outputs is illustrative. While a robotic materials removal and processing island has been illustrated, the method and apparatus of the invention are equally applicable to other multi-variate processes. While the term "process control" is used herein, it it to be understood that the term "process control" is used in a broad sense to encompass both "servomechanism" control of position, motion, velocity, and acceleration, and "process" control of temperature, pressure, and flow rate.

It is also to be noted that the interrupt method and apparatus of the invention can be used for process monitoring as well as process control.

Thus, in a chemical process the sensors, effectors, and actuators could include fluid and gas flow sensors, temperature and pressure sensors, optical reflectivity, refractivity, and absorbancy sensors, pyrometers, viscosity sensors, heating and cooling actuators and effectors, and fluid flow controllers. Similarly, for an aircraft control system, the sensors, effectors, actuators, and controllers could include sensors for attitude, pitch, roll, yaw, altitude, speed, and power plant, and power, and control surface actuators and effectors. Similarly, the inputs and outputs could be individual wheel speed sensors, brake pressure sensors, pre-ignition sensors, exhaust gas sensors, and effectors for brake pressure, transaxle, transfer case, and transmission ratios, timing, spark advance, mixture control, and the like in automotive systems.

Fig. 2 shows a simplified, high level, schematic of the control system 1. The control system segment resident in the digital computer 11 includes the applications programs, the multi-tasking, multi-threading environment operating system, and the multiport communications interface enabler functions, collectively shown as element 101. The applications could include process control applications, numerical machine control applications, and the like. The multi-tasking, multi-threading operating system could be an IBM OS/2$^{(R)}$ operating system for a full instruction set computer or IBM AIX$^{(R)}$ for a reduced instruction set computer, as an IBM RISC System 6000$^{(R)}$ Reduced Instruction Set Computer.

The communications interface 201, shown in Fig. 1, is made up of a dedicated real-time microprocessor 301 and dedicated memory 311, as shown in Fig. 2. By way of exemplification and not limitation, the dedicated, real-time microprocessor may be an Intel 80186 microprocessor, as described more fully hereinbelow. The communications interface 201 has dedicated memory means, 311, of, for example, 256K, 512K, 1 Meg, or more. In this way sampling algorithms and task control protocols are carried out independently of the running of the process control application, but subject to the supervision thereof. This allows the multiport communications interface 201 to control the protocols used for collecting the data, organizing storage, and, subject to supervisory control by the process control application, generating the appropriate interrupts.

The communications interface 201 also includes a plurality of communications ports 211, as RS-232 and/or RS-422 communications ports 211a, 211b, 211c, 211d, 211e, 211f, 211g, and 211h. The ports can be addressed as ports 0 to 7, or 0 to 7, and 8 to 15, or in a further embodiment, communications ports 0 to 7, 8 to 15, and 16 to 23.

b. The Multi-Tasking, Multi-Thread Environment

The use of a multi-tasking, multi-thread environment allows the large number of inputs to be accommodated, with inputs being received and processed at the hardware interrupt rate. Multi-tasking is the technique where several separate, but normally inter-related, tasks operate within a single program. This occurs through concurrent performance or interleaved execution. In multi-tasking the computer appears to be simultaneously executing these tasks, such as computing a control strategy, inputting an I/O from a communications port, and outputting an I/O to a communications port. Multi-tasking is controlled by the operating system, which loads the tasks and manages them until finished. In the physical process control apparatus and method of the invention, multi-tasking is advantageous due to the differences between I/O operation rates and the host digital computer processing speed. Thus, while one task is waiting for input, instructions in another task can be executed.

With the control system herein contemplated, the time between the input of physical measurements is used, for example, to calculate global process control strategies, to reformulate the transfer function, or to generate specific numerical machine control outputs for specific effectors and actuators.

Multi-threading is the concurrent or almost concurrent processing of transactions, where one transaction may not be completely processed before another one is commenced. A multi-threading environment is an environment that can support more then one logical path of execution being executed concurrently.

As used herein (a) "multi-tasking" refers to the concurrent execution of applications, such as concurrently calculating both (i) a global control strategy, and (ii) specific numerical machine control outputs to a specific controlled, effector, or actuator, and (b) "multi-threading" refers to the concurrent execution of tasks, such as concurrently (i) calculating a control strategy, or a control output, (ii) inputting the value of a physical variable, as a temperature, pressure, displacement, or velocity, and/or (iii) outputting a controller, effector, or actuator setting.

c. Interrupt Controlled Data Transfer

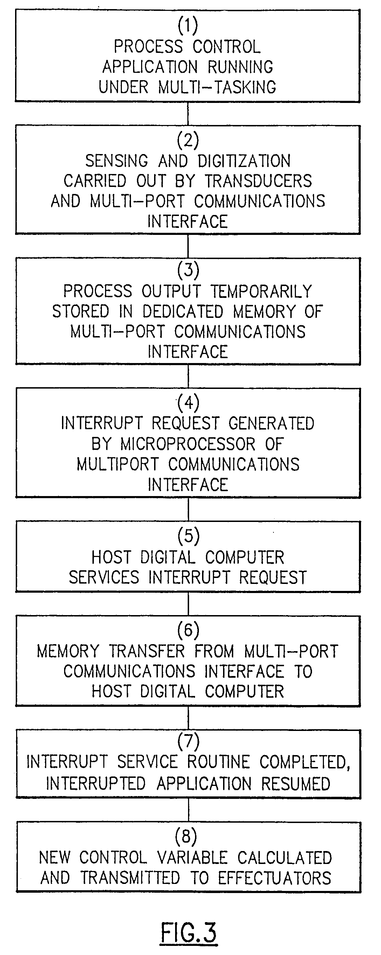

The combination of interrupt controlled data transfer and a multi-tasking, multi-thread environment is particularly advantageous. It allows the process control application to detect and process the received data at speeds considerably above those attainable by polling, for example at system hardware speeds. The operation of the system for reading I/O is illustrated by the flow chart of Fig. 3.

As illustrated in Fig. 3 a process control application program runs under the multi-tasking, multi-thread environment. This is shown in block 1 of Fig. 3. Concurrently, the sensing and digitizing of at least one of the process physical outputs occurs in conjunction with one of the communications ports. Sensing and digitization is represented by block 2 of Fig. 3. The sensed and digitized output of the physical process is temporarily stored in the dedicated memory associated with the communication port of the multi-port communications interface, as represented by block 3 of Fig. 3. When this output is stored, an interrupt request is generated by the multiport communications interface dedicated microprocessor and identified to the communications port corresponding to the process physical output. The interrupt request generation is represented by block 4 of Fig. 3.

At an appropriate time with respect to the application, task, or thread, being run by the host digital computer, the host digital computer interrupts the task or thread, and executes an interrupt service routine, represented by block 5 of Fig. 3. The interrupt service routine interrupts or suspends, for example, the process control application program task or thread, and inputs the contents of the communications port memory to the ALU or to the appropriate register or memory address of the host digital computer 11. Memory transfer is illustrated in block 6 of Fig. 3. After inputting the value of the variable, the process control task or thread resumes its process control application with a new value of the physical process variable. Completion of the interrupt service routine and resumption of the interrupted or suspended thread or task is represented by block 7 of Fig. 3.

The newly inputted value is then used to generate a process control output corresponding to the newly inputted process physical output. Calculation of the new control output, with the new value of the physical input, is shown in block 8 of Fig. 3. Calculation of a new process control output may include such tasks as changing one or more of the difference equations making up the system model or transfer function, or changing desired outputs. The calculated new value of the process control output is transmitted from the digital computer as an input to an effector of the controlled physical process. This is represented by block 9 of Fig. 3.

d. The Multi-Port Communications Module

The multi-port communications interface 201 has microprocessor 301 and memory 311 capability separate from that of the host digital computer 11, with each of the communications ports 211a...h associated with the dedicated microprocessor 301 and dedicated memory 311. By this expedient, sampling algorithms are carried out independently of the running of the process control application in the host digital computer 11, but subject to its supervision. The multiport communications interface 201 monitors a plurality of process outputs, capturing values of the outputs, and storing the captured values in the memory associated with the communications interface. These temporarily stored values are then transmitted to the digital computer under interrupt control.

Functionally moving dedicated microprocessor 301 control and memory 311 down to the multi-port communications interface 201 (as represented by the interface card in Fig. 1) allows the multi-port communications interface 201 to control the protocols used for collecting the data, the organization of storage, and, the generation of the appropriate interrupts. This relieves the host digital computer 11 of these tasks.

The communications interface 201, shown in Fig. 1, is made up of a dedicated microprocessor 301 and dedicated memory 311, as shown in Fig.

2. The dedicated microprocessor 301 in the multiport communications interface 201 is a real time coprocessor. The dedicated microprocessor may be an Intel 80186 microprocessor.

Digitized process data may be processed, e.g., stored in memory 311, on the occurrence of an ending string delimiter, or upon receipt of a preconfigured number of characters. After storage in the multi-port communications interface is complete, as evidenced by a change in the appropriate status register, an interrupt request flag is set by the multi-port communications interface processor.

More particularly, upon receipt and storage of the digitized process data, the dedicated microprocessor 301 generates an interrupt request. The status register indicates the communications port, and implicitly, the corresponding process physical output. When the host digital computer 11 enters the interrupt service thread or task in response to the interrupt request, the dedicated microprocessor assumes control of the data bus, and transmits the data stored at the memory address indicated by the status register. This inputs the contents of the addressed multi-port communications interface memory 311 address to the corresponding application thread in the host digital computer 11.

e. Integration of Data Sampling And Process Control With System Architecture

Integration of data sampling and process control with the system architecture is described with respect to a system where the host digital computer has an Intel i486[R] microprocessor and is operating in an IBM OS/2[R] multi-tasking, multithread environment, and the multiport communications interface has dedicated memory and a dedicated Intel 8086, 8088, or 80186 microprocessor.

The Intel 80186 microprocessor is a 16 bit microprocessor having two separate processing units, an execution unit, and a bus interface unit, EIU, with a multiplexed external 16 bit bus, and internal 16 bit architecture. The Intel 80186 microprocessor architecture includes a 16 bit arithmetic logic unit, and sixteen bit internal registers. The chip set, either integrated with the processor chip as in the case of an Intel 80186 processor, or separately,as in the case of an Intel 8088 or 8086 processor, includes a DMA controller, chip select units, bus controllers, and I/O controllers.

The multiport communications interface has communications ports, as eight RS 232 communications ports or an equivalent number of RS-422 communications ports or a combination thereof, RAM, a memory management unit, a Bus Controller, and Data Communications processors. The multiport communications interface connects to the host digital computer through the data bus.

The host digital computer has an Intel I486(R) microprocessor operating under an IBM OS/2(R) multi-tasking, multi-thread operating system. The microprocessor has a chip set, including local I/O support chip means (to support parallel and serial ports, floppy disk drives, display, and graphics, among others) or local channel support chip means (to support I/O peripherals, graphics, and floppy disk drives), central arbitration control, memory refresh generation and cycling, address decoding (including address decoding for the interrupt controller), bus and cache controller means, and memory means.

The individual communications ports of the multi-port communications interface operate under the control of the dedicated Intel 80186 microprocessor. Data collection from the individual communications ports may be system driven, as interrupt driven, or software driven, as polling.

The microprocessor processes the data under appropriate software control. This can be as simple as a comparison of the measurement with the previous measurement of the same physical output. If no change has occurred since the last reading, the processor can then proceed to the next task or thread. If, however, there has been a change, the new value can be stored in memory and a memory status register, indicator, flag, or bit changed.

Setting the memory status register, or a single bit thereof, corresponding to a particular communications port, initiates the transfer of data from the multi-port interface to the host digital computer. This occurs through the memory status transaction. Entering a memory status change can initiate one of the following data transfer sequences from the multi-port communications interface to the host digital computer, shown by way of exemplification and not limitation:

Mode 1:

1. The memory status register activates the ring indicator, RS-232 pin 22.
2. The host digital computer treats this as an interrupt request, setting the data terminal ready active, RS-232 pin 20.
3. The data set ready leads are activated.
4. The data is transferred on pin 2 of the RS232 of the multiport communications interface, and received on pin 3 of the host digital computer. The protocol may be hardware, firmware, or software determined, so as to identify the originating communications port.
5. The multi-port communications interface will then send an end of communications sequence, as "Control-D."

Mode 2:

1. The multi-port communications interface sets the Data Set Ready lead active, RS-232 pin 6.
2. The multi-port communications interface then sets the Request to Send active, RS-232 pin 4. This is received by the host digital computer on pin 8 as a Data Carrier Detect, and may be treated by the host digital computer as an interrupt request.
3. When the application running in the host digital computer completes the thread or task in process, it recognizes the Request To Send as an interrupt request, enters an appropriate interrupt service routine, executing an Interrupt Request Acknowledgement. This is either treated as a Clear To Send active, RS-232 pin 5, or initiates a Clear To Send active on RS-232 pin 5.
4. The data is transferred on pin 2 of the RS232 of the multiport communications interface, and received on pin 3 of the host digital computer. The protocol may be hardware, firmware, or software determined, so as to identify the originating communications port.
5. The multi-port communications interface will then send an end of communications sequence, as "Control-D."

Within the host digital computer, processing the maskable interrupt request initiates an interrupt sequence which includes establishing the interrupt type, pushing the contents of the PSW, CS, and IP registers onto the stack, clearing the IF and TF flags, sending the contents of memory locations to the IP (Interrupt Pointer) and CS, beginning the interrupt routine, enabling the interrupts, and executing IRET (Interrupt RETurn), popping IP, CS, and PSW from the stack to return to the interrupt application the interrupted application.

f. The Control Strategy

The method of the invention is particularly useful in the control of discrete time physical systems. Discrete time systems are those systems that can be described or modelled by difference equations. Complex discrete time systems can be described or modelled by state-space equations. In statespace equations the vector **u** represents the external inputs that drive the physical system, the vector **y** represents the system outputs or system response, and the vector **x** represents the internal or state variables of the system.

In general the vector equation that describes the internal state of the system at any time $(k+1)$ is given by the vector/matrix equation

$$\mathbf{x}(k+1) = \mathbf{f}[\mathbf{x}(k), \mathbf{u}(k)]$$

This says that the state of the system at time (k + 1), the vector $\mathbf{x}(k + 1)$, is a function of the state of the system at the previous time, $\mathbf{x}(k)$, and of the input at the previous time, $\mathbf{u}(k)$. The output vector of the system, $\mathbf{y}(k + 1)$, is then given by the vector/matrix equation

$$\mathbf{y}(k) = \mathbf{g}[\mathbf{x}(k), \mathbf{u}(k)].$$

If the system of vector/matrix equations can be linearized, the system of vector/matrix equations can be reduced to:

$$\mathbf{x}(k + 1) = \mathbf{A}(k)\mathbf{x}(k) + \mathbf{B}(k)\mathbf{u}(k)$$
$$\mathbf{y}(k) = \mathbf{C}(k)\mathbf{x}(k) + \mathbf{D}(k)\mathbf{u}(k).$$

where $\mathbf{A}(k)$, $\mathbf{B}(k)$, $\mathbf{C}(k)$, and $\mathbf{D}(k)$ are the system transfer matrices as is well known in the process control art.

According to the method of the invention the vector $\mathbf{y}$ is monitored and the equations solved recursively for the input vector $\mathbf{u}$ to obtain a desired output vector $\mathbf{y}$. In this way an output vector $\mathbf{y}$ can be attained by conventional proportional, integral, and differential strategy, or by various numerical strategies. The strategy depends on the physical system. Various systems are illustrated and described below.

### g. Integrated Systems

#### 1. Integration of Islands of Automation

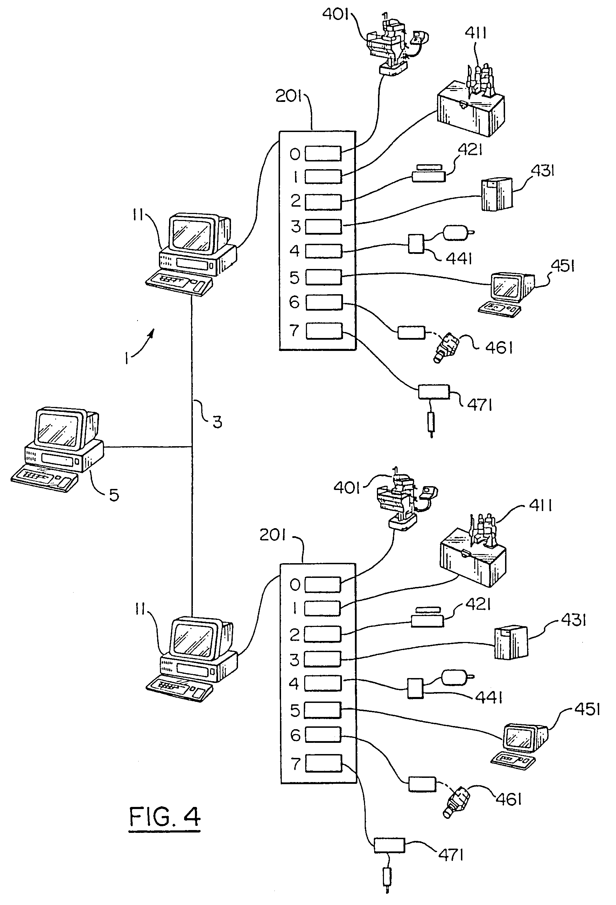

Fig. 4 shows an integrated system, joining several "islands of automation" of the type shown in Fig. 1. This is exemplary of a Computer Integrated Manufacturing (CIM) application, for example, where orders or sales are an input to the process, and a local area network allows members of the local area network members to perform and oversee scheduling, routing, fabrication, assembly, testing, and shipment of product. In the exemplification illustrated in Fig. 4 each set of elements relate to the processing or a part or component, or to a function, as materials removal, assembly, or testing. Each island has a first level host system digital computer 11. The host system digital computer 11 provides a multi-tasking, multi-thread environment. The first level host system computer 11 communicates with the local process, i.e., island of automation, through the dedicated microprocessor controlled multiport communications interface 201. Typical sensors, controllers, effectors, and actuators for a robotic materials removal and materials processing island include a numerical control machine 401, a robot 411, a scale 421, a programmable logic controller 431, a motor controller 441, a machine operator's terminal 451, a machine vision recognition input, 461, and a strain gauge 471.

The individual systems 1 are on a local area network 3 controlled by a second level host system digital computer 5. This local area network provides, for example, specifications and tolerances to each sub-system, transfers "as manufactured" data between sub-systems for fine corrections and back to the second level host system for changing control settings or sequences, as well as balancing manufacturing loads.

### 2. Host-Server Numerical Machine Control System

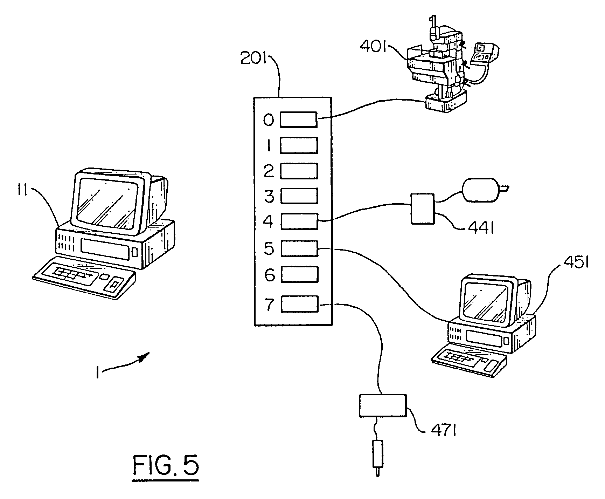

Fig. 5 shows a host-server numerical machine control system. The numerical machine control system has a host system digital computer 11. The host system digital computer 11 provides a multi-tasking, multi-thread environment. The first level host system computer 11 communicates with the process through the dedicated microprocessor controlled multiport communications interface 201. Typical sensors, controllers, effectors, and actuators for a robotic materials removal and materials processing island include the numerical control machine tool 401, a motor controller 441, a machine operator's terminal 451, and a strain gauge 471.

In the case of a robotic manufacturing process, design data is passed from the host digital computer 11 to the robotic element, while the dedicated robotic microprocessor monitors and controls the position and degrees of freedom of the robotic arm.

### 3. Chemical Reactor System

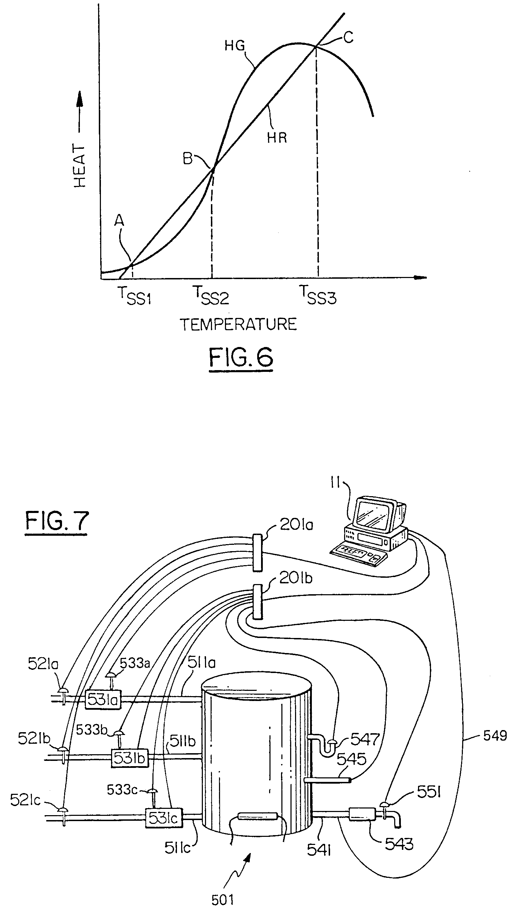

Exothermic chemical reactions carried out in continuous flow stirred tanks chemical reactors (CFSTR) are difficult to control. This is illustrated by the the heat generation and rejection curves for a single exothermic chemical reaction carried out in a continuous flow stirred tank reactor, Fig. 6.

The curve shows a heat removal curve HR and a heat generation curve HG. These curves intersect at three steady states, A at $T_{ss1}$, B at $T_{ss2}$, and C at $T_{ss3}$, where the $T_{ss}$'s represent steady state temperatures.

If the reactor is at steady state B, and at temperature $T_{ss2}$, it will drift toward a new steady state, either A or C. If, however, the reactor is at steady state A or C, and is perturbed, it will return to the steady state from which perturbed.

The locations of the steady states can be changed by changing the control variables. For example, the slope and s-shapedness of the heat generation curve can be increased, and the curve moved to the left by increasing the residence time, i.e., decreasing the flow rates through the CFSTR.

The heat removal curve can be moved to the right by increasing the reaction temperature.

A continuous flow stirred tank chemical reactor is shown in Fig. 7. The reactor 501 has a plurality of inlet lines 511a, 511b, and 511c, controlled by control valves 521a, 521b, and 521c, and in contact with heat exchangers 531a, 531b, and 531c. The heat exchangers 531a, 531b, and 531c are controlled by control means 533a, 533b, and 533c. Product output is through line 541, controlled by control means 543. Product temperature is measured by sensor 545, internal pressure is measured by sensor 547, and product flow rate is measured by sensor 549.

A feasible control strategy would be to define a temperature that optimizes product quality at a set flowrate, and to control the other variables to attain that temperature.

While this exemplification has been illustrated and described with respect to a steady state or "flow" process, the process could be a batch process, with time dependency of the process variables.

## Claims

1. A method of controlling a multi-output physical process utilizing a process controller comprising:

   a. a multi-tasking environment digital computer;

   b. said digital computer having a plurality of communications ports, said communications ports having microprocessor means and memory means associated therewith;

   said method comprising the steps of:

   a. running a process control application program in said digital computer;

   b. sensing and digitizing one of said process physical outputs at one of said communications ports;

   c. storing said digitized process physical output in the memory means of the communications port;

   d. generating an interrupt request from said communications port corresponding to said process physical output;

   e. servicing an interrupt routine to input the contents of the communications port memory means to the digital computer;

   f. resuming the process control application with a value of a variable corresponding to the newly inputted process physical output and generating a process control output corresponding to the inputted process physical output; and

   g. sending the process control output as input to an effector of said physical process.

2. The method of claim 1 comprising monitoring each port with the associated microprocessor means for physical process output data, storing said physical process output data in the memory means associated with the communications port, and thereafter generating the interrupt request from said communications port.

3. The method of claim 2 comprising monitoring the data from a port for an ending string delimiter, and storing each delimited string in the memory means associated with the communications port.

4. The method of claim 2 comprising monitoring the data from a port for a preconfigured number of characters, and storing each character string in the memory means associated with the communications port.

5. The method of anyone of claims 1 to 4 comprising inputting the contents of the communications port memory means to the digital computer at the digital computer hardware interrupt rate.

6. The method of claim 1 comprising the steps of:

   a. generating an interrupt request from a communications port corresponding to a process physical output to an application thread corresponding to said communications port and process physical output;

   b. servicing an interrupt routine to input the contents of the communications port memory means to the corresponding application thread in the digital computer;

   c. processing the newly inputted process physical output with the corresponding application thread and generating a process control output corresponding to the inputted process physical output;

   d. sending the process control output of the application thread as input to an effector of said physical process; and

   e. terminating processing the thread.

7. A method of controlling a multi-output physical process utilizing a process controller comprising:

   a. a multi-tasking environment digital computer;

   b. said digital computer having a plurality of communications ports, said communications ports having microprocessor means and memory means associated therewith;

   said method comprising the steps of:

a. running a process control application program in said digital computer;

b. sensing and digitizing one of said process physical outputs at one of said communications ports;

c. storing said digitized process physical output in the memory means of the communications port;

d. generating an interrupt request from said communications port corresponding to said process physical output to an application thread corresponding to said communications port and process physical output;

e. servicing an interrupt routine to input the contents of the communications port memory means to the corresponding application thread in the digital computer;

f. resuming the process control application with a value of a variable corresponding to the newly inputted process physical output and generating a process control output corresponding to the inputted process physical output;

g. sending the process control output as input to an effector of said physical process; and

h. terminating processing the thread.

8. A method of monitoring a multi-output physical process utilizing a data data acquisition system comprising:

a. a multi-tasking environment digital computer;

b. said digital computer having a plurality of communications ports, said communications ports having microprocessor means and memory means associated therewith;

said method comprising the steps of:

a. running an application program in said digital computer;

b. sensing and digitizing one of said process physical outputs at one of said communications ports;

c. storing said digitized process physical output in the memory means of the communications port;

d. generating an interrupt request from said communications port corresponding to said process physical output;

e. servicing an interrupt routine to input the contents of the communications port memory means to the digital computer; and

f. resuming the application.

9. Apparatus for controlling a multi-output physical process comprising:

a. a multi-tasking environment digital computer, said digital computer having:

i. a plurality of communications ports, said communications ports having microprocessor means and memory means for storing process physical output in the memory means; and

ii. means for running a process control application program;

b. means for sensing and digitizing one of said process physical outputs at one of said communications ports;

c. means associated with said communications port for generating an interrupt request from said communications port receiving and storing a process physical output to said digital computer;

d. means in said digital computer for servicing an interrupt routine to input the contents of the communications port memory means to the digital computer;

e. process control application means for processing a value of a variable corresponding to the newly inputted process physical output and generating a process control output corresponding to the inputted process physical output; and

f. means for sending the process control output as input to an effector of said physical process.

FIG.1

←——— HOST DIGITAL ———   ———— MULTI PORT COMMUNICATIONS ————→
         COMPUTER                       INTERFACE CARD

FIG.2

```
┌─────────────────────────────────┐
│              (1)                │
│         PROCESS CONTROL         │
│      APPLICATION RUNNING        │
│       UNDER MULTI-TASKING       │
└─────────────────────────────────┘
                 │
┌─────────────────────────────────┐
│              (2)                │
│      SENSING AND DIGITIZATION   │
│     CARRIED OUT BY TRANSDUCERS  │
│    AND MULTI-PORT COMMUNICATIONS│
│            INTERFACE            │
└─────────────────────────────────┘
                 │
┌─────────────────────────────────┐
│              (3)                │
│    PROCESS OUTPUT TEMPORARILY   │
│    STORED IN DEDICATED MEMORY OF│
│      MULTI-PORT COMMUNICATIONS  │
│            INTERFACE            │
└─────────────────────────────────┘
                 │
┌─────────────────────────────────┐
│              (4)                │
│    INTERRUPT REQUEST GENERATED  │
│        BY MICROPROCESSOR OF     │
│      MULTIPORT COMMUNICATIONS   │
│            INTERFACE            │
└─────────────────────────────────┘
                 │
┌─────────────────────────────────┐
│              (5)                │
│      HOST DIGITAL COMPUTER      │
│     SERVICES INTERRUPT REQUEST  │
└─────────────────────────────────┘
                 │
┌─────────────────────────────────┐
│              (6)                │
│  MEMORY TRANSFER FROM MULTI-PORT│
│    COMMUNICATIONS INTERFACE TO  │
│       HOST DIGITAL COMPUTER     │
└─────────────────────────────────┘
                 │
┌─────────────────────────────────┐
│              (7)                │
│ INTERRUPT SERVICE ROUTINE COMPLETED,│
│   INTERRUPTED APPLICATION RESUMED   │
└─────────────────────────────────┘
                 │
┌─────────────────────────────────┐
│              (8)                │
│  NEW CONTROL VARIABLE CALCULATED│
│   AND TRANSMITTED TO EFFECTUATORS│
└─────────────────────────────────┘
```

FIG.3

FIG. 4

FIG. 5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | ZWF CIM ZEITSCHRIFT FüR WIRTSCHAFTLICHE FERTIGUNG UND AUTOMATISIERUNG vol. 86, no. 3, March 1991, MüNCHEN,DE pages 122 - 126; F.HARTNER AND M.NEUHAUSER: 'Flexible Fertigungssysteme in der Nutzfahrzeugindustrie steuern und überwachen' * page 124, paragraph 3 - page 124, paragraph 5 * * figure 3 * | 1,7,8,9 | G05B19/04 G05B19/417 |
| A | --- | 2-6 | |
| P,Y | EP-A-0 442 714 (INTERNATIONAL BUSINESS MACHINES CORPORATION) 21 August 1991 * column 4, line 9 - column 6, line 56 * * figures 1,2 * | 1,7-9 | |
| A | --- | 2-6 | |
| A | DE-A-3 040 008 (SIEMENS AG) 13 May 1982 * page 3, line 25 - page 4, line 30 * * figure 1 * --- | 1-9 | |
| | | | TECHNICAL FIELDS SEARCHED (Int. Cl.5) |
| A | US-A-4 283 773 (JOHN W. DAUGHTON ET AL) 11 August 1981 * column 7, line 9 - column 7, line 52 * * column 21, line 3 - column 24, line 8 * * figures 3,4A,4B * ----- | 1-9 | G05B |

The present search report has been drawn up for all claims

| Place of search | Date of completion of the search | Examiner |
|---|---|---|
| THE HAGUE | 15 JULY 1992 | NETTESHEIM J. |